# EUROPEAN PATENT APPLICATION

(11) **EP 2 551 991 A1**
(43) Date of publication of application: **30.01.2013**
(21) Application number: 11759211.3
(22) Date of filing: 10.03.2011
(51) Int. Cl.: H02J 17/00, B60L 5/00, B60L 11/18, B60M 7/00, H01F 38/14, H02J 7/00

(54) **POWER-FEED DEVICE**

(30) Priority: 23.03.2010 JP 2010065605
(71) Applicant: Toyota Jidosha Kabushiki Kaisha, Toyota-shi, Aichi 471-8571 (JP)
(72) Inventor: AMANO, Yasushi, Aichi-gun Aichi 480-1192 (JP); ICHIKAWA, Shinji, Toyota-shi Aichi 471-8571 (JP)
(74) Representative: Intès, Didier Gérard André
(86) International application number: PCT/JP2011/055641
(87) International publication number: WO 2011/118404

(57) **Abstract**

Disclosed is a vehicle charging system that includes a plurality of primary self-resonance coils (20, 22) provided on a road (10) side and a plurality of secondary self-resonance coils (24, 26) provided on a vehicle (14). Power is fed from the primary self-resonance coils (20, 22) to the secondary self-resonance coils (24, 26). Each primary self-resonance coil (20, 22) has a different resonance frequency from the adjacent primary self-resonance coils (20, 22). Each secondary self-resonance coil (24, 26) hasadifferent resonance frequency from the adjacent secondary self-resonance coils (24, 26).

## Description

### Technical Field

The present invention relates to a power-feed device which comprise a plurality of primary coils provided on a first portion and a plurality of secondary coils provided on a second portion, and which feeds power from the primary coil to the secondary coil.

### Background Art

In the related art, in electricity driven vehicles such as an electric vehicle, a hybrid electric vehicle, or the like, driving of a traveling motor, which drives the wheel, using electric power suppliedfrom a batteryisconsidered. For example, a hybrid electric vehicle is equipped with a traveling motor and an engine, and at least one of the traveling motor and the engine is used as a driving source of the vehicle.

In such an electricity driven vehicle, configurations are considered in which, when charged electric power of the battery is reduced, a power generator is driven by the engine and the electric power generated by the power generator is supplied and charged to the battery; the old battery is replaced with a new battery; or an alternating current electric power supplied from an external alternating current power supply is converted to a direct current electric power and supplied and charged to the battery. For example, in the case of a vehicle which is known as a plug-in hybrid electric vehicle, a plug provided on one side of a charging cable is connected to a power outlet connected to an external power supply such as a home-use power supply or the like, and a plug provided on the other side of the charging cable is connected to a charging port provided in the vehicle, to charge the vehicle. In addition, a configuration is also considered in which a mobile unit power-feed device which feeds power wirelessly from a primary coil provided on a fixed side to a secondary coil provided on a side of the vehicle which is a mobile unit is used, to wirelessly transmit electric power from the external power supply to the vehicle and charge the battery.

For example, as described in Patent Literature 1, a charging system is known in which charging fromapower supply external to a vehicle to an electricity storage device equipped in the vehicle is enabled through transmission of power using resonance which is a wireless power transmission method which does not use a power supply cord or a power transmission cable. This charging system comprises an electricity driven vehicle and a power-feed device. The electricity driven vehicle comprises a secondary resonance coil which is electromagnetically coupled with a primary resonance coil of the power-feed device through resonance of an electromagnetic field and which can receive high-frequency electric power from the primary resonance coil, a secondary coil configured to be able to receive power from the secondary resonance coil through electromagnetic induction, a rectifier, and an electricity storage device. The rectifier rectifies the electric power received by the secondary coil, and the electricity storage device stores electric power rectified by the rectifier. Patent Literature 1 also describes that a plurality of sets of one or both of the secondary resonance coil and the secondary coil may be provided on the vehicle side, or a plurality of sets of one or both of the primary resonance coil and the primary coil may be provided on the power-feed device side.

Patent Literature 2 discloses a non-contact power-feed device comprising a large number of power-feed modules provided on a moving path of a mobile unit, and a large number of power receiving modules provided on the mobile unit. In the power-feed module, a power-feed circuit is integrated with a power-feed coil. In the power receiving module, the power receiving circuit is integrated to a power receiving coil. An alternating current from an alternating current power supply is converted into a sine wave of a high frequency by the power-feed module, and is supplied to respective power-feed coil, to generate a high-frequency magnetic field. When the power receiving coil provided on the mobile unit is close to the power-feed coil, an induced electromotive force generated between the power-feed coil and the power receiving coil is received by the power receiving coil, and the received electric power is rectified and is then supplied to a load such as an electric motor or the like which drives the mobile unit.

### [Related Art References]

### [Patent Literature]

[Patent Literature 1] JP 2009-106136 A
[Patent Literature 2] JP 2006-121791 A

### Disclosure of Invention

### [Technical Problem]

In the case of the charging system disclosed in the Patent Literature 1, charging is enabled from the power supply external to the vehicle to the electricity storage device equipped in the vehicle by transmission of power through resonance which is a wireless power transmission method, but Patent Literature 1 does not disclose provision of a plurality of primary resonance coils on the fixed side and a plurality of secondary resonance coils on the mobile unit side. Because of this, when power is to be transmitted from the power-feed device external to the vehicle to the electricity storage device equipped on the vehicle during the traveling of the vehicle, there is a room of improvement from the viewpoint of reducing electric power transmitted or received per coil by receiving the power from a plurality of primary resonance coils with a plurality of secondary resonance coils. When the electric power transmitted or received per coil becomes large, the loss may be increased due to copper loss or the like.

On the other hand, in the case of the non-contact power-feed device described in Patent Literature 2, because a plurality of power-feed coils and power receiving coils are provided, there is a possibility that the electric power transmitted or received per coil may be reduced by simultaneously transmitting power from the plurality of power-feed coils to the plurality of power receiving coils. However, when coils of the same resonance frequency are used as the plurality of coils, if the power is transmitted and received between coils through the resonance method using electromagnetic field resonance, the coils that are positioned close to each other may resonate with each other, and there is a possibility that power transmission with a high transmission efficiency cannot be achieved. In addition, when the positional relationship between the coils changes due to the movement of the mobile unit, the resonance frequency changes, and as a result, setting of the frequency of the electric power to be transmitted may become complicated.

In addition, when the power is to be fed from a primary coil provided on a first portion to a secondary coil provided on a second portion in a structure of a power-feed device not limited to such a mobile unit power-feed device, it is desired to improve the transmission efficiency when transmission and reception using the electromagnetic field resonance similar to the above are performed.

An advantage of the present invention is that transmission efficiency is improved even when power is transmitted and received using the electromagnetic field resonance using a plurality of primary coils and a plurality of primary coils in a power-feed device.

### [Solution to Problem]

According to one aspect of the present invention, there is provided a power-feed device comprising a plurality of primary coils provided on a first portion, and a plurality of secondary coils provided on a second portion, wherein power is fed from the primary coil to the secondary coil, each of the primary coils has a different resonance frequency from adjacent primary coils, and each of the secondary coils has a different resonance frequency from adjacent secondary coils.

According to another aspect of the present invention, preferably, in the power-feed device, the first portion on which the plurality of primary coils are provided is a fixed side, and is used for feeding power to a mobile unit which is the second portion on which the plurality of secondary coils are provided, the plurality of primary coils include at least one first primary coil and at least one second primary coil, the first primary coil and the second primary coil having different resonance frequencies from each other and being alternately placed with respect to a movement direction of the mobile unit, and the plurality of secondary coils include at least one first secondary coil and at least one second secondary coil, the first secondary coil and the second secondary coil having different resonance frequencies from each other and being alternately placed with respect to the movement direction of the mobile unit.

According to another aspect of the present invention, preferably, in the power-feed device, the first portion on which the plurality of primary coils are provided is a fixed side, and is used for feeding power to a mobile unit which is the second portion on which the plurality of secondary coils are provided, the plurality of secondary coils are arranged in one line along a movement direction of the mobile unit, and the plurality of primary coils are arranged in one line so that the plurality of primary coils can oppose the plurality of secondary coils in an up-and-down direction, with the movement of the mobile unit.

According to another aspect of the present invention, preferably, in the power-feed device, the first portion on which the plurality of primary coils are provided is a fixed side, and is used for feeding power to a mobile unit which is the second portion on which the plurality of secondary coils are provided, the plurality of secondary coils are arranged in a plurality of lines along a movement direction of the mobile unit, and the plurality of primary coils are arranged in a plurality of lines so that the plurality of primary coils can oppose the corresponding line of the plurality of secondary coils in an up-and-down direction, with the movement of the mobile unit.

According to another aspect of the present invention, preferably, in the power-feed device, each of the primary coils has a different resonance frequency from the adjacent primary coils by having one or more of a radius, a length in an axial direction, and a number of windings different from the adjacent primary coils, and each of the secondary coils has a different resonance frequency from the adjacent secondary coils by having one or more of a radius, a length in an axial direction, and a number of windings different from the adjacent secondary coils.

According to another aspect of the present invention, preferably, the power-feed device further comprises a capacitor which is connected to one or both of the plurality of primary coils and the plurality of secondary coils, wherein one or both of the plurality of primary coils and the plurality of secondary coils has a different resonance frequency from the adjacent primary coils or the adjacent secondary coils by having a different capacity of the capacitor connected to the primary coil or the secondary coil from that of the adjacent primary coils or the adjacent secondary coils.

### [Advantageous Effect of Invention]

According to various aspects of the power-feed device of the present invention, the transmission efficiency can be improved even when power is transmitted or received through electromagnetic resonance using a plurality of primary coils and a plurality of secondary coils.

### Brief Description of Drawings

FIG. 1 is an overall structural diagram showing a vehicle charging system which is a power-feed device according to a first embodiment of the present invention.
FIG. 2 is a diagram showing a circuit for charging from a secondary electricity storage side coil to an electricity storage unit and for driving a motor with the electricity storage unit in FIG. 1.
FIG. 3 is a schematic diagram showing an opposed state of a primary self-resonance coil on a side of a road and a secondary self-resonance coil on a side of a vehicle in the first embodiment of the present invention.
FIG. 4 is a perspective view showing two types of primary self-resonance coils or secondary self-resonance coils which are adjacent to each other in the first embodiment of the present invention.
FIG. 5 is a schematic diagram showing an opposed state of a primary coil and a secondary coil by placing two primary coils having the same resonance frequency and two secondary coils having the same resonance frequency in a Comparative Example which is outside of the scope of the present invention.
FIG. 6 is a diagram showing an example of a simulation result of a relationship between a transmission efficiency and a frequency when electric power is transmitted from one primary coil to the primary coil itself and to the other coils in the placement position of FIG. 5.
FIG. 7 is a schematic diagram showing an opposed state of a primary coil and a secondary coil when only one primary coil and one secondary are provided.
FIG. 8 is a diagram showing an example of a simulation result of a relationship between a transmission efficiency and a frequency when electric power is transmitted from the primary coil to the primary coil itself and to the other coil in the placement position of FIG. 7.
FIG. 9 is a schematic diagram showing a structure used for the simulation for checking advantages of the first embodiment of the present invention.
FIG. 10 is a diagram showing an example of a simulation result of a relationship between a transmission efficiency and a frequency when electric power is transmitted from a primary coil to the primary coil itself and to an opposing secondary coil, assuming that two pairs of primary coils and secondary coils which face (oppose in corresponding positions) each other in the axial direction are present significantly distanced from each other, in the coil structure of FIG. 9.
FIG. 11 is a diagram showing a simulation result of a relationship between a transmission efficiency and a frequency when electric power is transmitted from one primary coil to the primary coil itself and to the other coils in a placement structure of FIG. 9.
FIG. 12 is a diagram showing a simulation result of a relationship between a transmission efficiency and a frequency when electric power is transmitted from another primary coil to the primary coil itself and to the other coils in the placement structure of FIG. 9.
FIG. 13A is a perspective view showing a first example of an alternative configuration of two types of primary self-resonance coils or secondary self-resonance coils which are adjacent to each other in the first embodiment of the present invention.
FIG. 13B is a perspective view showing a second example of an alternative configuration of two types of primary self-resonance coils or secondary self-resonance coils which are adjacent to each other in the first embodiment of the present invention.
FIG. 13C is a perspective view showing a third example of an alternative configuration of two types of primary self-resonance coils or secondary self-resonance coils which are adjacent to each other in the first embodiment of the present invention.
FIG. 14 is a schematic perspective view showing an opposed state of first self-resonance coils and second self-resonance coils in a second embodiment of the present invention.
FIG. 15 is a schematic diagram showing, viewed from the top toward the bottom, a placement structure of primary self-resonance coils and secondary self-resonance coils when a vehicle moves on a road according to a second embodiment of the present invention.

### Description of Exemplary Embodiments

### [First Embodiment]

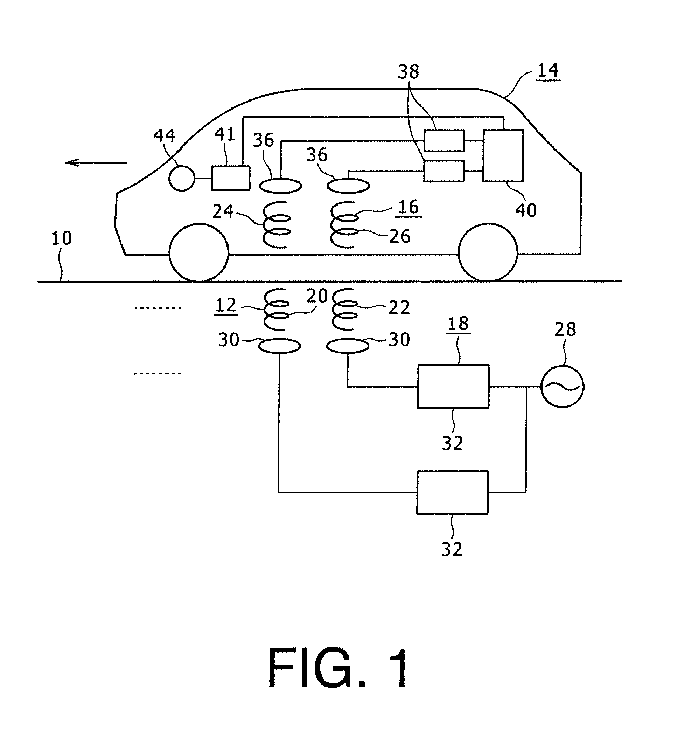

Embodiments of the present invention will now be described with reference to the drawings. FIGs. 1 - 4 show a first embodiment of the present invention. As shown in FIG. 1, a vehicle charging system which is a power-feed device of the present embodiment and which is also a mobile unit power-feed device comprises a group of primary self-resonance coils 12 provided on a side of a road 10 which is first portion and also a fixed side, and a group of secondary self-resonance coils 16 provided on a vehicle 14 which is a second portion and which is also a mobile unit, and feeds power from the group of the primary self-resonance coils 12 to the group of the secondary self-resonance coils 16. That is, the vehicle charging system is used for feeding power to the vehicle 14. For this purpose, the vehicle charging system comprises a power-feed device 18 and the vehicle 14 which is an electricity driven vehicle.

The power-feed device 18 comprises an alternating current power supply 28, a plurality of primary power supply side coils 30, the group of the primary self-resonance coils 12, a primary-side controller (not shown) which is a controller, and a switching switch (not shown). The group of primary self-resonance coils 12 includes a plurality of first primary self-resonance coils 20 and a plurality of second primary self-resonance coils 22, both of which are primary coils. The alternating current power supply 28 is an external power supply, and is, for example, a system power supply. The alternating current power supply 28 and each primary power supply side coil 30 are connected by a high-frequency electric power driver 32. The switching switch is provided common to the high-frequency electric power drivers 32 between the alternating current power supply 28 and a plurality of the high-frequency electric power drivers 32. The primary-side controller controls switching of connection and disconnection of the switching switch. With the connection of the switching switch, the alternating current electric power is supplied from the alternating current power supply 28 to the high-frequency electric power drivers 32. The high-frequency electric power driver 32 converts frequency of the electric power which is output from the alternating current power supply 28, and outputs the converted electric power to the primary power supply side coil 30.

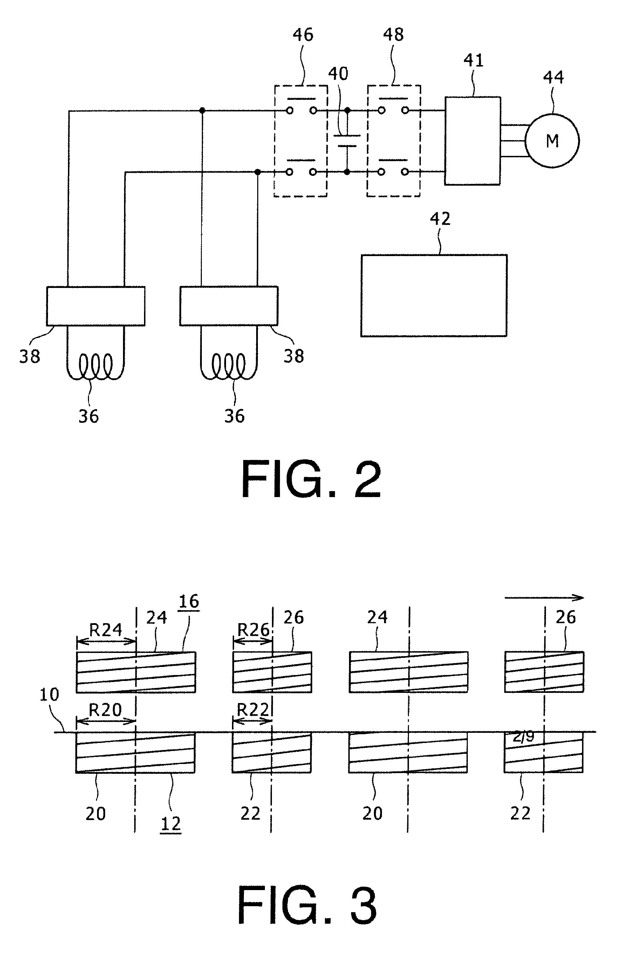

The primary power supply side coil 30 is configured to be able to transmit power to a corresponding primary self-resonance coil 20 (or 22) through electromagnetic induction. Preferably, the primary power supply side coil 30 is placed on the same axis as the corresponding primary self-resonance coil 20 (or 22). The primary power supply side coil 30 outputs the electric power from the alternating current power supply 28 to the corresponding primary self-resonance coil 20 (or 22). As shown in the schematic diagram of FIG. 3, the primary self-resonance coils 20 and 22 are placed on a straight line path which is a section of the road 10 dedicated for charging (charge-dedicated section) such that the first primary self-resonance coil 20 and the second primary self-resonance coil 22 are alternately placed and arranged in one line along a straight line direction (left-and-right direction of FIG. 3) which is a movement direction of the vehicle 14 (FIG. 1). For example, the plurality of primary self-resonance coils 20 and 22 are placed such that the axial direction is oriented in the up-and-down direction and the spacing between central axes is the same such as one line on a straight line. As will be described later in detail, the first primary self-resonance coil 20 and the second primary self-resonance coil 22 have different resonance frequencies from each other.

As shown in FIG. 1, the primary power supply side coil 30 is placed near the ground of the straight line path of the road 10, below the primary self-resonance coil 20 (or 22), and approximately opposing the primary self-resonance coil 20 (or 22) in the up-and-down direction. The primary self-resonance coils 20 and 22 are non-connect LC resonance coils having both ends opened. The high-frequency electric power driver 32 converts the electric power which is output from the alternating current power supply 28 into a high-frequency electric power which can be transmitted from the corresponding primary self-resonance coil 20 (or 22) to a corresponding secondary self-resonance coil 24 (or 26) on the side of the vehicle 14, and supplies the converted high-frequency electric power to the corresponding primary power supply side coil 30.

The vehicle 14 is an electricity driven vehicle such as, for example, a hybrid electric vehicle having at least one of an engine (not shown) and a traveling motor 34 as a primary drive source, or an electric automobile having the traveling motor 34 as the primary drive source. The vehicle 14 comprises a group of secondary self-resonance coils 16 placed near a floor section, a plurality of secondary electricity storage side coils 36, a rectifier 38, an electricity storage unit 40, a drive unit 41 including an inverter circuit, a secondary-side controller 42 (FIG. 2) which is a controller, and a traveling motor 44.

The group of secondary self-resonance coils 16 includes a plurality of first secondary self-resonance coils 24 and a plurality of second secondary self-resonance coils 26, both of which are secondary coils. The plurality of secondary electricity storage side coils 36 are placed opposing the plurality of secondary self-resonance coils 24 and 26 in the up-and-down direction. The rectifier 38 is connected to the secondary electricity storage side coils 36.

The secondary self-resonance coils 24 and 26 are LC resonance coils having both ends opened. The plurality of secondary self-resonance coils 24 and 26 are placed, for example, aligned in the front-and-rear direction of the vehicle 14 with the axial direction oriented in the up-and-down direction. As shown in the schematic diagram of FIG. 3, in the vehicle 14 (FIG. 1), the first secondary self-resonance coils 24 and the second secondary self-resonance coils 26 are placed alternately and arranged in one line along the front-and-rear direction (left-and-right direction in FIG. 1) which is the movement direction of the vehicle 14. The plurality of primary self-resonance coils 20 and 22 placed on the side of the road 10 are placed in one line so that the primary self-resonance coils 20 and 22 can oppose the plurality of secondary self-resonance coils 24 and 26 in the up-and-down direction, with the movement of the vehicle 14. As will be described later in detail, the first secondary self-resonance coil 24 and the second secondary self-resonance coil 26 have different resonance frequencies from each other.

The secondary self-resonance coils 24 and 26 are configured to be able to receive the electric power from the primary self-resonance coils 20 and 22 by being electromagnetically coupled to the primary self-resonance coils 20 and 22 on the side of the road 10 through resonance of electromagnetic field. Numbers of windings of the secondary self-resonance coils 24 and 26 are set based on a voltage of the electricity storage unit 40 (FIGs. 1 and 2), a distance between the primary self-resonance coils 20 and 22 and the secondary self-resonance coils 24 and 26, resonance frequencies between the primary self-resonance coils 20 and 22 and the secondary self-resonance coils 24 and 26, etc., such that a value indicating a sharpness of resonance of the coil (Q value), a value indicating a degree of coupling, etc., of the primary self-resonance coils 20 and 22 and the secondary self-resonance coils 24 and 26 are enlarged.

As shown in FIG. 2, the secondary electricity storage side coil 36 is configured to be able to receive electric power from the secondary self-resonance coils 24 and 26 (FIG. 1) through electromagnetic induction, and is preferably placed on the same axis as the corresponding secondary self-resonance coil 24 and 26. The secondary electricity storage side coil 36 outputs the electric power received from the secondary self-resonance coils 24 and 26 to the rectifier 38. The rectifier 38 rectifies the high-frequency alternating current electric power received from the secondary electricity storage side coil 36 into a direct current electric power, and outputs the converted power to the electricity storage unit 40. Alternatively, in place of the rectifier 38, an AC-to-DC converter which converts the high-frequency alternating current electric power received from the secondary electricity storage side coil 36 into the direct current electric power to be supplied to the electricity storage unit 40 may be employed.

The electricity storage unit 40 is a direct current power supply which can be charged and discharged, and is configured, for example, with a secondary battery such as a lithium ion battery and a nickel metal hydride battery. The electricity storage unit 40 has a function, in addition to storing electric power supplied from the rectifier 38, to store an electric power generated by the traveling motor with the braking of the wheels. The electricity storage unit 40 can supply the electric power to the secondary-side controller 42. Alternatively, as the electricity storage unit 40, a large-capacity capacitor may be used.

The drive unit 41 converts the electric power supplied from the electricity storage unit 40 into an alternating current voltage, outputs the converted voltage to the traveling motor 44, and drives the traveling motor 44. The drive unit 41 also rectifies the electric power generated by the traveling motor 44 into a direct current electric power, outputs the rectified power to the electricity storage unit 40, and charges the electricity storage unit 40.

The traveling motor 44 is supplied with electric power from the electricity storage unit 40 through the drive unit 41, generates a vehicle driving force, and outputs the generated driving force to the wheel.

As shown in detail in FIG. 2, the rectifier 38 connected to the secondary electricity storage side coil 36 is connected to the electricity storage unit 40 through a first switch 46, and a second switch 48 is provided between a positive electrode side and a negative electrode side of the electricity storage unit 40 and the drive unit 41. For example, the secondary-side controller 42 connects one of the first switch 46 and the second switch 48 and disconnects the other one of the first switch 46 and the second switch 48 based on an operation of an operation unit such as a switch or the like by the driver, so that the secondary-side controller 40 can switch between supplying electric power to the traveling motor 44 to drive the traveling motor 44 or charging from the alternating current power supply 28 (FIG. 1) to the electricity storage unit 40.

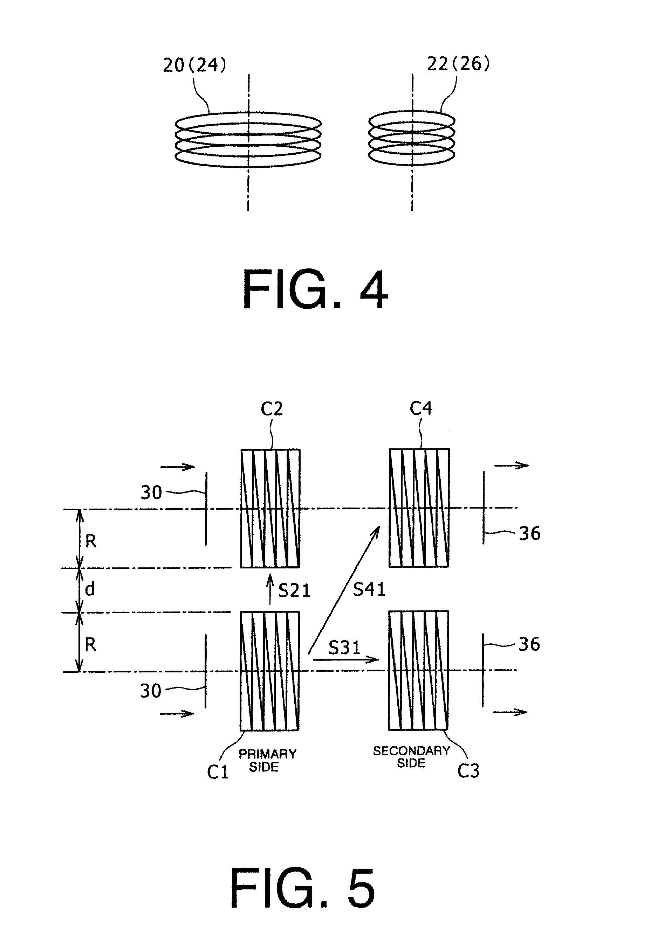

As shown in FIG. 3, the first primary self-resonance coil 20 and the second primary self-resonance coil 22 which are adjacent to each other have different resonance frequencies. Because of this, each of the plurality of primary self-resonance coils 20 and 22 has a resonance frequency which differs from an adjacent primary self-resonance coil 20 (or 22). For this purpose, as shown in FIG. 4, a radius R20 and a radius R22 of the first primary self-resonance coil 20 and the second primary self-resonance coil 22 adjacent to each other are set to different radii. Specifically, as shown in FIG. 3, the group of primary self-resonance coils 12 includes the first primary self-resonance coils 20 having the same first radius R20 and placed at every other position along the movement direction (arrow direction of FIG. 3) of the vehicle 14 (FIG. 1), and the second primary self-resonance coils 22 having the second radius R22 which differs from the first radius R20 and placed between two first primary self-resonance coils 20. Different resonance frequencies are set for the first primary self-resonance coil and the second primary self-resonance coil which are adjacent to each other. Because of this, for the plurality of primary self-resonance coils 20 and 22, the resonance frequency alternately changes along the movement direction of the vehicle 14. In addition, the first primary self-resonance coil 20 and the second primary self-resonance, coil 22 are formed with identical shapes other than the radius, such as the length in the axial direction.

The plurality of secondary self-resonance coils 24 and 26 are configured such that the secondary self-resonance coils 24 and 26 adjacent in the front-and-rear direction (arrow direction in FIG. 3) of the vehicle 14 (FIG. 1) have different resonance frequencies from each other. For this purpose, as shown in FIG. 4, a radius R24 and a radius R26 which differ from each other are set for the first secondary self-resonance coil 24 and the second secondary self-resonance coil 26 which are adjacent to each other. Specifically, the group of secondary self-resonance coils 16 (FIG. 3) includes first secondary self-resonance coils 24 having the same first radius R24 and placed along the movement direction of the vehicle 14 at every other position, and second secondary self-resonance coils 26 having the second radius R26 which differs from the first radius R24 and placed between two first secondary self-resonance coils 24. Therefore, for the plurality of secondary self-resonance coils 24 and 26, the resonance frequency alternately changes along the movement direction of the vehicle 14. In addition, the first secondary self-resonance coil 24 and the second secondary self-resonance coil 26 are formed with identical shapes other than the radius, such as the length in the axial direction.

The resonance frequency of the first secondary self-resonance coil 24 and the resonance frequency of the first primary self-resonance coil 20 coincide, and the resonance frequency of the second secondary self-resonance coil 26 and the resonance frequency of the second primary self-resonance coil 22 coincide. In addition, a spacing between centers of adjacent secondary self-resonance coils 24 and 26 and a spacing between centers of adjacent primary self-resonance coils 20 and 22 are set to the same in at least a portion corresponding to a part or all of the plurality of the primary self-resonance coils 20 and 22. With regard to the high-frequency electric power driver 32 provided between the alternating current power supply 28 and the primary power supply side coil 30 shown in FIG. 1, two high-frequency electric power drivers 32 may be provided corresponding to the two types of the first primary self-resonance coil 20 and the second primary self-resonance coil 22, and a plurality of the primary power supply side coils 30 which output the corresponding electric power of the same frequency may be connected to each of the two high-frequency electric power drivers 32. In addition, each of the numbers of the first primary self-resonance coils 20, the second primary self-resonance coils 22, the first secondary self-resonance coils 24, and the second secondary self-resonance coils 26 may be set to 1 or greater.

In the present embodiment having such a configuration, the electric power is transmitted from the side of the road 10 to the vehicle 14 in the following manner. Specifically, electric power having the frequency converted through the high-frequency electric power driver 32 is supplied from the alternating current power supply 28 to all of the primary power supply side coil 30, and electric power is transmitted from the primary power supply side coil 30 to the corresponding primary self-resonance coils 20 and 22 through electromagnetic induction. In addition, electric power is transmitted from the primary self-resonance coils 20 and 22 to the secondary self-resonance coils 24 and 24 on the side of the vehicle 14 through electromagnetic field resonance, and the electric power is transmitted from the secondary self-resonance coils 24 and 26 to the secondary electricity storage side coil 36 through electromagnetic induction. An electric current rectified by the rectifier 38 into a direct current is sent from the secondary electricity storage side coil 36 to the electricity storage unit 40, and the electricity storage unit 40 is charged.

According to the present embodiment, even when the vehicle 14, which is a mobile unit, moves, the frequency of the electric power to be transmitted can be easily set. In addition, the transmission efficiency can be set high even when the electric power is transmitted and received through electromagnetic field resonance using a plurality of primary self-resonance coils 20 and 24 and a plurality of secondary self-resonance coils 24 and 26. Specifically, when the number of coils to be used for transmitting and receiving the electric power is increased as in the present embodiment, the electric power transmitted per individual coil can be reduced, and therefore, the current flowing through individual coils can be reduced. Because of this, the copper loss can be reduced and the transmission efficiency can be improved. However, unlike the present embodiment, if the coils of the same resonance frequency are to be used as the coils, in the non-contact electric power transmission through resonance using electromagnetic field resonance, the transmission efficiency may be degraded. In particular, when the numbers of coils of the transmission side and the reception side are both plural and the electric power is to be transmitted and received between the power transmitting side coils and the power receiving side coils, if a distance between adjacent coils of the power transmitting side and a distance between adjacent coils of the power receiving side are close, there is a possibility that the transmission efficiency will be degraded. The reason for this will next be described in detail.

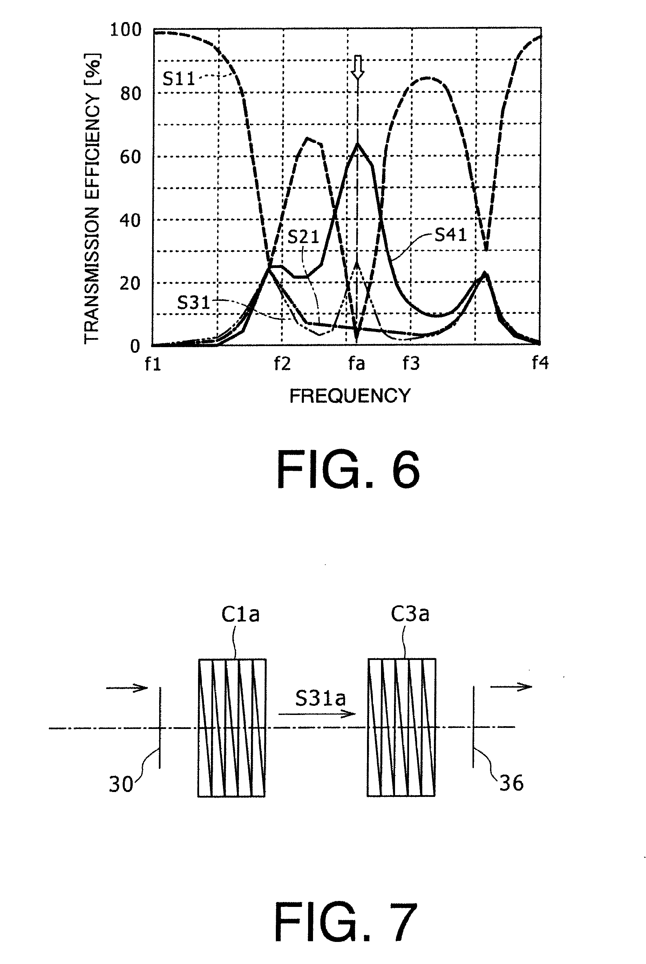

For example, FIG. 5 is a schematic diagram showing a Comparative Example which is outside of the scope of the present invention and in which two primary coils C1 and C2 having the same resonance frequency and two secondary coils C3 and C4 having the same resonance frequency are placed, in such a manner that the primary coils C1 and C2 and the secondary coils C3 and C4 oppose each other. FIG. 6 is a diagram showing an example of a calculation result of a relationship between the transmission efficiency and the frequency when the electric power is transmitted from one primary coil C1 to the primary coil C1 itself and to the other coils in the placement position of FIG. 5.

In FIG. 5, similar to the present embodiment, the alternating current electric power from the alternating current power supply and having the frequency converted by the high-frequency driver can be transmitted, through electromagnetic induction, from two primary power supply side coils 30 to the primary coils C1 and C2 which are two primary self-resonance coils which oppose the primary power supply side coils 30. In addition, the alternating current electric power transmitted from the primary coils C1 and C2 to the secondary coils C3 and C4 which are two secondary self-resonance coils can be transmitted, through electromagnetic induction, to two secondary electricity storage side coils 36 which oppose the secondary coils C3 and C4.

Moreover, as shown in FIG. 5, the radius R of the coils C1 - C4 is determined (for example, to 30 cm), the spacing d between adjacent primary coils C1 and C2 and the adjacent secondary coils C3 and C4 is determined (for example, to 10 cm), and a calculation, that is, a simulation, for determining a relationship between the transmission efficiency and the frequency when the electric power is transmitted from one primary coil C1 to one primary coil C1 itself and to the other coils C2 - C4 was performed. The shapes of the coils C1 - C4 are set to be identical, including the length in the axial direction, the number of windings, etc. FIG. 6 shows a result of the simulation.

In FIG. 6, a broken line S11 shows a transmission efficiency of electric power returning from the one primary coil C1 to the one primary coil C1 itself, and a dot-and-chain line S21 shows a transmission efficiency of the electric power transmitted from the one primary coil C1 to the other, adjacent primary coil C2. In addition, a two-dots-and-chain line S31 shows a transmission efficiency of the electric power transmitted from the one primary coil C1 to one secondary coil C3 which faces (opposes in a corresponding position) the one primary coil C1 in the axial direction, and a solid line S41 shows a transmission efficiency of the electric power transmitted from the one primary coil C1 to the other secondary coil C4 which faces the other primary coil C2 in the axial direction. In the following description of FIG. 6, the reference numerals of FIG. 5 are used for the description.

As is clear from the result shown in FIG. 6, in the case of the coil placement of FIG. 5, the transmission efficiency of the transmitted electric power from the one primary coil C1, which is the power supply side, to the secondary coils C3 and C4, which are power receiving coils, was about 85% which is a sum of the transmission efficiencies to the secondary coils C3 and C4 (=S31 + S41) at a resonance frequency point fa having the highest transmission efficiency. In addition, a result of simulation for determining the relationship between the transmission efficiency and the frequency when the electric power is transmitted from the other primary coil C2 to the other primary coil C2 itself and to the other coils C1, C3, and C4 was similar to the result of FIG. 6.

In this case, the broken line S11 in FIG. 6 becomes S22 which is a transmission efficiency of electric power returning from the other primary coil C2 to the other primary coil C2 itself, and the dot-and-chain line S21 in FIG. 6 becomes S12 which is a transmission efficiency of the electric power transmitted from the other primary coil C2 to the one primary coil C1 which is adjacent to the primary coil C2. Similarly, the two-dots-and-chain line S31 in FIG. 6 becomes S42 which is a transmission efficiency of electric power transmitted from the other primary coil C2 to the other secondary coil C4 facing the other primary coil C2 in the axial direction, and the solid line S41 in FIG. 6 becomes S32 which is a transmission efficiency of electric power transmitted from the other primary coil C2 to the one secondary coil C3 facing the one primary coil C1 in the axial direction. In this case also, the transmission efficiency of the transmitted electric power from the other primary coil C2 which is the power supply side to the secondary coils C3 and C4 which are power receiving coils was about 85% (= S32 + S42) which is a sum of the transmission efficiencies to the secondary coils C3 and C4 at a resonance frequency point having the highest transmission efficiency. It is known that when only one power transmitting side coil and one power receiving side coil are provided, and electric power is transmitted from the one power transmitting side coil to the one power receiving side coil, the transmission efficiency is about 95%. Therefore, it can be understood that when a plurality of power transmitting side coils and a plurality of power receiving side coils are provided as described above, the transmission efficiency from each of the power transmitting coils is significantly degraded.

A reason for the degradation of the transmission efficiency is that there is a transmission efficiency S21 from the one primary coil C1 to the other primary coil C2 of about 5%, and a transmission efficiency S12 from the other primary coil C2 to the one primary coil C1 of about 5%. In other words, the power transmitting side coils C1 and C2 resonate with each other, and electric power is transmitted between the power transmitting side coils C1 and C2. Because of this, the present inventors have contemplated that, with the structure of the related art without any devisal, the efficiency is not necessarily improved even when a plurality of the coils C1 and C2 (or C3 and C4) having the same resonance frequency are provided on the power transmitting side and the power receiving side.

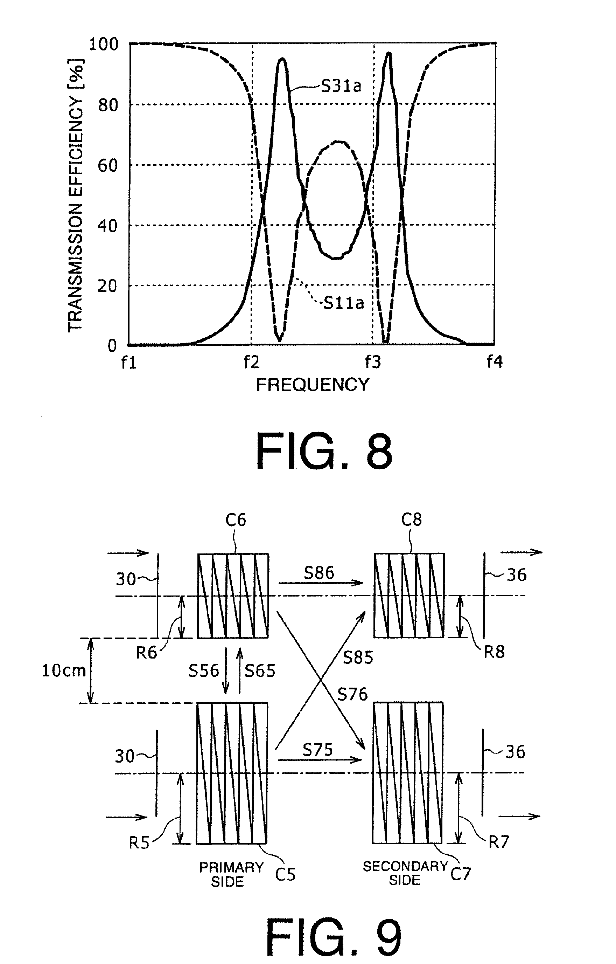

On the other hand, in the case where only one power transmitting side coil and one power receiving side coil are provided and the electric power is transmitted from the one power transmitting side coil to the one power receiving side coil, that is, when the electric power is transmitted through close coupling, there exist 2 resonance points where the transmission efficiency is high, and the transmission efficiency between the coils is high at each resonance point, being about 95%. For example, FIG. 7 is a schematic diagram showing a conf iguration where only one primary coil and one secondary coil are provided, and the primary coil and the secondary coil are placed to oppose each other. FIG. 8 is a diagram showing an example of a simulation result of a relationship between the transmission efficiency and the frequency when the electric power is transmitted from the primary coil to the primary coil itself and to the other coil in the placement position of FIG. 7.

The structure of FIG. 7 is similar to the structure of FIG. 5 except that only one primary coil C1a, which is the primary self-resonance coil, and one secondary coil C3a, which is the secondary self-resonance coil, are placed. FIG. 8 shows a result of a calculation, that is, a simulation, for determining the relationship between the transmission efficiency and the frequency when electric power is transmitted from the primary coil C1a to the primary coil C1a itself and to the secondary coil C3a.

In FIG. 8, a broken line S11a shows a transmission efficiency of electric power returning from the primary coil C1a to the primary coil C1a itself, and a solid line S31a shows a transmission efficiency of electric power transmitted from the primary coil C1a to the secondary coil C3a.

As is clear from the result shown in FIG. 8, in the case where one power transmitting side coil C1a and one power receiving side coil C3a are provided and electric power is transmitted from the one power transmitting side coil C1a to the one power receiving side coil C3a, that is, when the electric power is transmitted through close coupling, there exist 2 resonance points where the transmission efficiency is high, and the transmission efficiency is about 95% in each of the resonance points.

On the other hand, when a plurality of the power transmitting side coils and a plurality of the power receiving side coils are provided, as is clear from the simulation result shown in FIG. 6 described above, the resonance point where the transmission efficiency is high is in an intermediate frequency band between the 2 resonance points occurring in the case of the close coupling, and moreover, according to the simulation by the present inventors, the frequency where the transmission efficiency is high varies depending on the position relationship of the coils. Because of this, when the mobile unit having the power receiving side coils moves and the power receiving side coils move relative to the power transmitting side coils, there is a possibility of a disadvantage that the frequency setting of the electric power to be transmitted becomes complicated.

On the other hand, in the case of the present embodiment described above with reference to FIGs. 1 - 4, with regard to the primary self-resonance coils 20 and 22, the resonance frequencies of the adjacent primary self-resonance coils 20 and 22 differ from each other, and with regard to the secondary self-resonance coils 24 and 26, the resonance frequencies of the adjacent secondary self-resonance coils 24 and 26 differ from each other. Because of this, for a plurality of pairs each formed by one primary self-resonance coil and one secondary self-resonance coil which approximately face each other in the axial direction, the adjacent pairs resonate at different frequencies, and the electric power can be transmitted with a high efficiency. For example, for each pair, the transmission efficiency of the electric power from the primary self-resonance coil 20 (or 22) to the secondary self-resonance coil 24 (or 26) can be set to a high efficiency of about 95%.

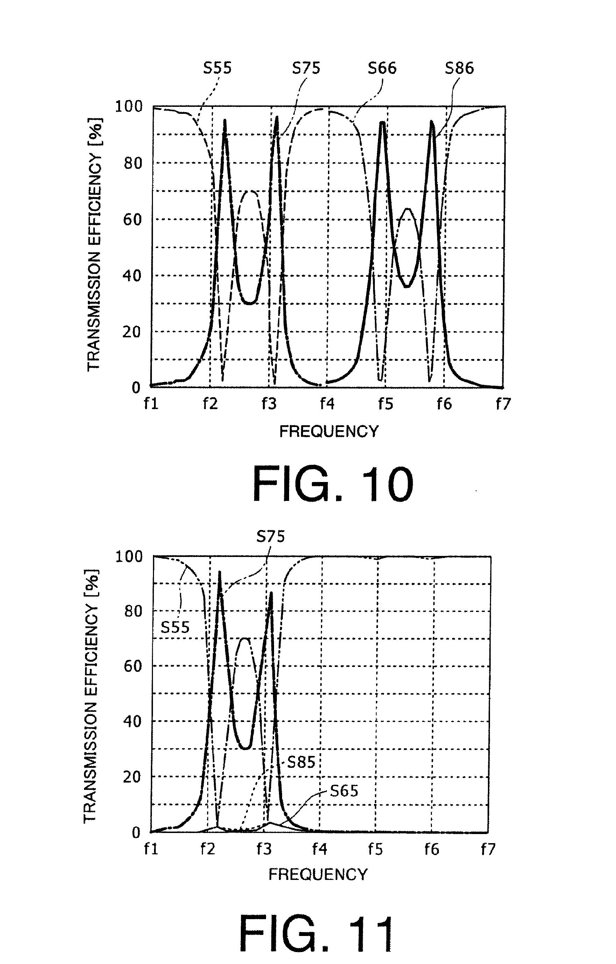

Next, a result of simulation performed for checking an advantage of the present embodiment will be described. FIG. 9 is a schematic diagram showing a structure used for the simulation for checking the advantage of the present invention. In this structure, two primary coils having different resonance frequencies from each other and two secondary coils having different resonance frequencies from each other are placed, and the primary coils and the secondary coils are set to oppose each other. FIG. 10 is diagram showing an example of a simulation result of a relationship between the transmission efficiency and the frequency of a case where it is assumed that two pairs, each having a primary coil and a secondary coil which face each other in the axial direction, are significantly distanced from each other, that is, the pairs exist independent from each other, in the coil structure of FIG. 9, and where the electric power is transmitted from the primary coil to the primary coil itself and to the opposing secondary coil.

As shown in FIG. 9, in the structure used for the simulation, the two primary coils C5 and C6 which are primary self-resonance coils have different resonance frequencies from each other by setting different shapes, that is, different radii R5 and R6. In addition, the two secondary coils C7 and C8 which are secondary self-resonance coils have different resonance frequencies from each other by setting different shapes, that is, different radii R7 and R8. The other structures are similar to those of FIG. 5 described above. In FIG. 10, a result of a calculation, that is, a simulation, for determining a relationship between the transmission efficiency and the frequency when it is assumed that the electric power is transmitted from each of the primary coils C5 and C6 to each of the primary coils C5 and C6 itself and only to the secondary coils C7 and C8 which face in the axial direction, is shown.

In FIG. 10, a broken line S55 shows a transmission efficiency of electric power returning from the one primary coil C5 to the one primary coil C5 itself, and a dot-and-chain line S75 shows a transmission efficiency of electric power transmitted from the one primary coil C5 to the one secondary coil C7 which faces the one primary coil C5 in the axial direction. In addition, a two-dots-and-chain line S66 shows a transmission efficiency of electric power returning from the other primary coil C6 to the other primary coil C6 itself, and a solid line S86 shows a transmission efficiency of electric power transmitted from the other primary coil C6 to the other secondary coil C8 facing the other primary coil C6 in the axial direction.

As shown in FIG. 10, the plurality of pairs, each formed with the primary coil C5 (or C6) and the secondary coil C7 (or C8) which face each other in the axial direction, resonate at different frequencies from each other, and the electric power can be transmitted with an efficiency of about 95%.

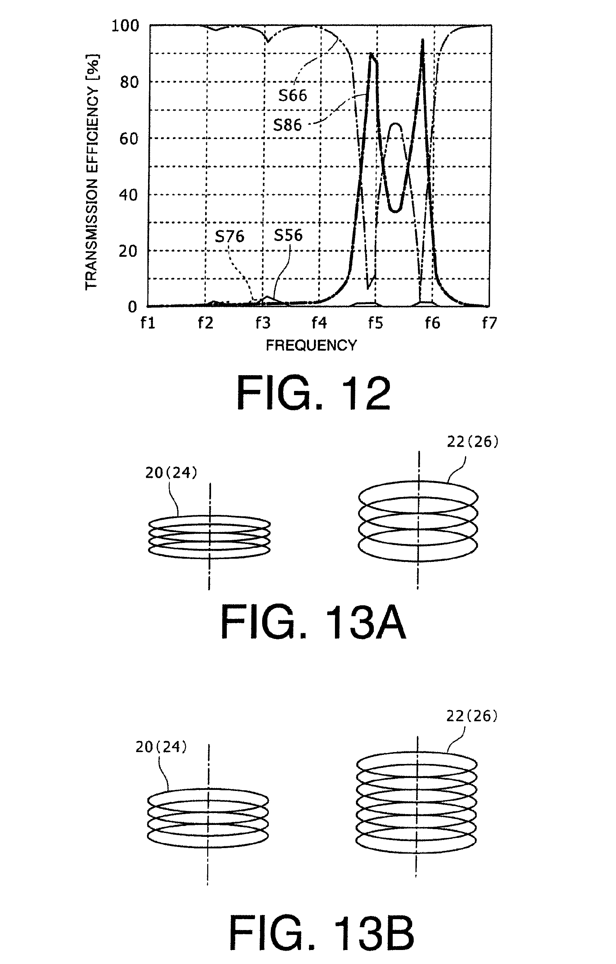

FIG. 11 shows an example of a result of a simulation determining the efficiency and the frequency when two pairs of primary coils C5 and C6 and secondary coils C7 and C8 which resonate at different frequencies are placed and the electric power is transmitted from the one primary coil C5 to the one primary coil C5 itself or to the other coils. Similarly, FIG. 12 shows an example of a simulation result determining the efficiency and the frequency when the electric power is transmitted from the other primary coil C6 to the other primary coil C6 itself or to the other coils. In FIG. 11, a two-dots-and-chain line S55 shows a transmission efficiency of the electric power returning from the one primary coil C5 to the one primary coil C5, and a solid line S65 shows a transmission efficiency of the electric power transmitted from the one primary coil C5 to the other primary coil C6 which is adjacent. Similarly, a dot-and-chain line S75 shows a transmission efficiency of the electric power transmitted from the one primary coil C5 to the one secondary coil C7 which faces the one primary coil C5 in the axial direction, and a broken line S85 shows a transmission efficiency the electric power transmitted from the one primary coil C5 to the other secondary coil C8 which faces the other primary coil C6 in the axial direction.

In FIG. 12, a two-dots-and-chain line S66 shows a transmission efficiency of the electric power returning from the other primary coil C6 to the other primary coil C6 itself, and a solid line S56 shows a transmission efficiency of the electric power transmitted from the other primary coil C6 to the one primary coil C5 which is adjacent. Similarly, a broken line S76 shows a transmission efficiency of the electric power transmitted from the other primary coil C6 to the one secondary coil C7 which faces the one primary coil C5 in the axial direction, and a dot-and-chain line S86 shows a transmission efficiency of the electric power transmitted from the other primary coil C6 to the other secondary coil C8 which faces the other primary coil C6 in the axial direction.

As is clear from the results of FIGs. 11 and 12, in the present embodiment, even when the electric power is transmitted and received through electromagnetic field resonance using a plurality of the primary self-resonance coils 20 and 22 and a plurality of the second self-resonance coils 24 and 26, the transmission efficiency can be improved at the resonance points of the coils 20, 22, 24, and 26. From FIGs. 11 and 12, it can be understood that there exist two resonance frequencies when the electric power is transmitted from each of the primary self-resonance coils 20 and 22 to the secondary self-resonance coil 24 or 26 which faces the primary self-resonance coil, and one of these resonance frequencies may be set as the frequency on the side of the power supply.

In the present embodiment, for the plurality of the primary self-resonance coils 20 and 22, in order to set different resonance frequencies for the adjacent primary self-resonance coils 20 and 22, different diameters are set for the first primary self-resonance coil 20 and the second primary self-resonance coil 22 adjacent to each other. Similarly, for the plurality of secondary self-resonance coils 24 and 26, in order to set different resonance frequencies for the adjacent secondary self-resonance coils 24 and 26, different diameters are set for the first secondary self-resonance coil 24 and the second secondary self-resonance coil 26 adjacent to each other. However, the present embodiment is not limited to such a configuration, and as shown in FIG. 13A, different lengths in the axial direction may be employed for the adjacent primary self-resonance coils 20 and 22 (or adjacent secondary self-resonance coils 24 and 26), to achieve different resonance frequencies. Alternatively, as shown in FIG. 13B, different numbers of windings, that is, different numbers of turns, may be set for the adjacent primary self-resonance coils 20 and 22 (or adjacent secondary self-resonance coils 24 and 26), to achieve the different resonance frequencies. In FIG. 13B, the lengths in the axial direction also differ from each other between the adjacent primary self-resonance coils 20 and 22 (or adjacent secondary self-resonance coils 24 and 26), but alternatively, the lengths in the axial direction may be set to the same length, and different numbers of windings may be employed. Alternatively, the different resonance frequencies may be achieved by setting one or more, that is, one, two, or three of the diameter, the length in the axial direction, and the number of windings to be different from each other for one or both of the adjacent primary self-resonance coils 20 and 22 and the adjacent secondary self-resonance coils 24 and 26.

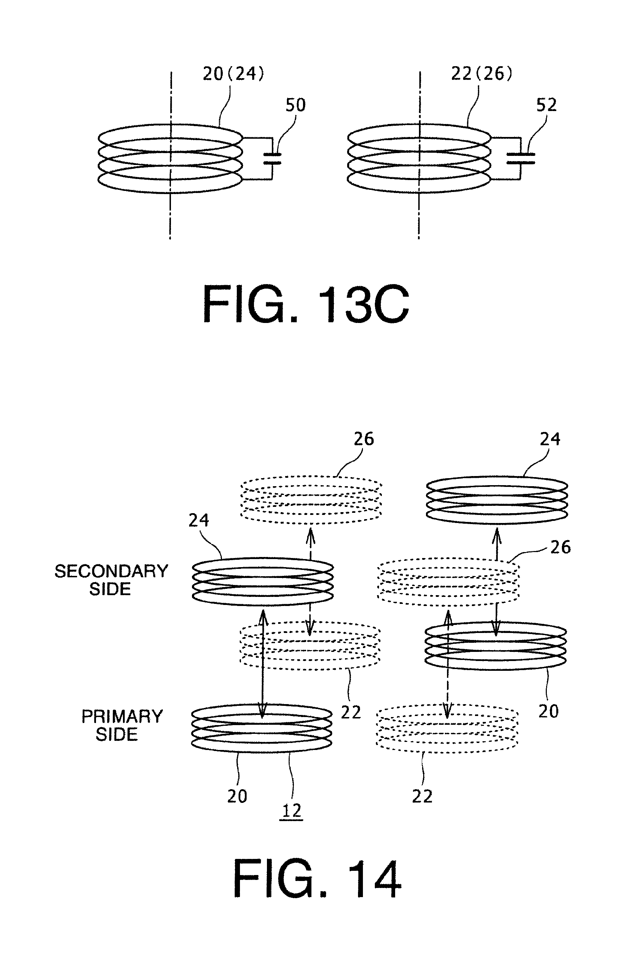

Alternatively, as shown in FIG. 13C, variable capacity capacitors 50 and 52 may be connected to one or both of the plurality of primary self-resonance coils 20 and 22 and the plurality of secondary self-resonance coils 24 and 26, and different capacitances may be set for the connected variable capacity capacitors 50 and 52 between adjacent primary self-resonance coils 20 and 22 (or the adjacent secondary self-resonance coils 24 and 26), so that different resonance frequencies are set.

In the primary self-resonance coils 20 and 22 and the secondary self-resonance coils 24 and 26, the structure for achieving the different resonance frequencies for adjacent coils 20, 22, 24, and 26 may be different between the power supply side and the vehicle side. For example, different diameters may be set for the achieving different resonance frequencies for the adjacent primary self-resonance coils 20 and 22 and different lengths in the axial direction may be set for achieving different resonance frequencies for the adjacent secondary self-resonance coils 24 and 26.

### [Second Embodiment]

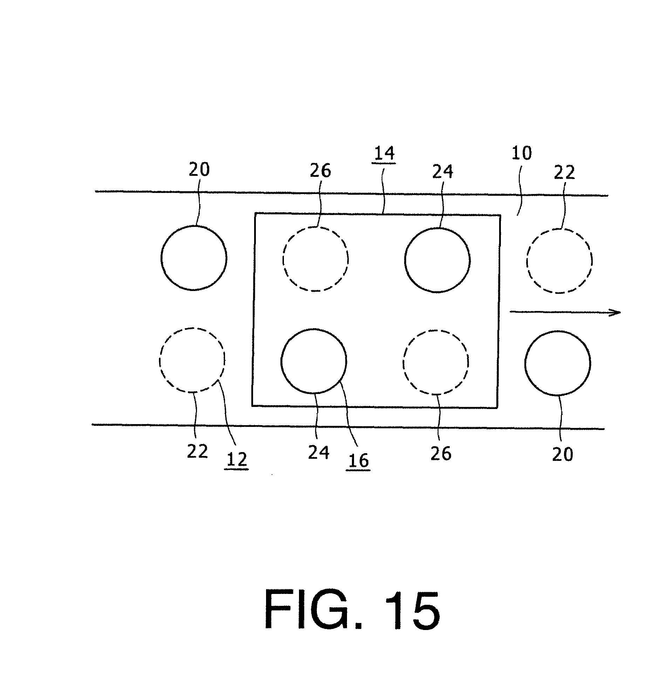

FIG. 14 is schematic perspective diagram showing an opposed state of primary self-resonance coils and secondary self-resonance coils in a second embodiment of the present invention. FIG. 15 is a schematic diagram, viewed from the top toward the bottom, of the placement structure of the primary self-resonance coils and the secondary self-resonance coils when a vehicle moves on a road, in the second embodiment of the present invention. In FIGs. 14 and 15, the coils having a first resonance frequency is shown with a solid line andapluralityof coils having a second resonance frequency different from the first resonance frequency are shown with a broken line.

As shown in FIGs. 14 and 15, in the present embodiment, the plurality of secondary self-resonance coils 24 and 26 and the secondary electricity storage side coils 36 (refer to FIGs. 1 and 2) are placed in a plurality of lines (in the example configuration of the drawings, 2 lines) along a front-and-rear direction (left-and-right direction of FIG. 15) which is a movement direction of the vehicle 14. Similarly, the plurality of primary self-resonance coils 20 and 22 and the primary power supply side coils 30 (refer to FIG. 1) are placed in a plurality of lines (in the example configuration of the drawings, 2 lines) along the up-and-down direction (up-and-down direction of FIG. 14 and direction into and out of the page in FIG. 15) and corresponding to the lines of the plurality of secondary self-resonance coils 24 and 26, so as to be able to oppose the secondary self-resonance coils 24 and 26, with the movement of the vehicle 14.

Specifically, in the present embodiment, the plurality of primary self-resonance coils 20 and 22 are placed on the side of the road 10 in a plurality of lines, for example, 2 lines, along a straight line direction (left-and-right direction of FIG. 15) which is the movement direction of the vehicle 14. For the plurality of primary self-resonance coils 20 and 22, different resonance frequencies are set between the primary self-resonance coils 20 and 22 adjacent in the straight line direction and between primary self-resonance coils 20 and 22 adjacent in a lateral direction orthogonal to the straight line direction (up-and-down direction in FIG. 15). For this purpose, the first primary self-resonance coils 20 having a first resonance frequency and the second primary self-resonance coils 22 having a second resonance frequency are alternately placed in each line in the straight line direction, and the first primary self-resonance coils 20 and the second primary self-resonance coils 22 are aligned along the lateral direction.

On the side of the vehicle 14, the plurality of secondary self-resonance coils 24 and 26 are placed in a plurality of lines, for example, 2 lines, along the front-and-rear direction (left-and-right direction of FIG. 15) which is the movement direction of the vehicle 14. Moreover, for the plurality of secondary self-resonance coils 24 and 26, different resonance frequencies are set between the secondary self-resonance coils 24 and 26 adjacent in the front-and-rear direction and between the secondary self-resonance coils 24 and 26 adjacent in a width direction (up-and-down direction of FIG. 15) of the vehicle 14 orthogonal to the front-and-rear direction. For this purpose, the first secondary self-resonance coils 24 and the second secondary self-resonance coils 26 having different resonance frequencies from each other are alternately placed in the front-and-rear direction of the vehicle 14 on each line, and the first secondary self-resonance coil 24 and the second secondary self-resonance coil 26 are placed to oppose coils 24 and 26 in the width direction of the vehicle 14.

A spacing between centers of the secondary self-resonance coils 24 and 26 adjacent in the front-and-rear direction of the vehicle 14 and a spacing between the centers of the primary self-resonance coils 20 and 22 adjacent in the straight line direction of the road 10 are set to be the same at least in a portion corresponding to a part of or all of the plurality of the primary self-resonance coils 20 and 22. Moreover, the spacing between centers of the secondary self-resonance coils 24 and 26 adjacent in the width direction of the vehicle 14 and the spacing between centers of the primary self-resonance coils 20 and 22 adjacent in the lateral direction of the road 10 are set to be the same.

Furthermore, the plurality of primary power supply side coils 30 (refer to FIG. 1) are placed to oppose the plurality of primary self-resonance coils 20 and 22, and the plurality of secondary electricity storage side coils 36 (refer to FIG. 1) are placed to oppose the plurality of secondary self-resonance coils 24 and 26.

In the case of the present embodiment having the structure as described above also, when electric power is transmitted from the side of the road 10 to the vehicle 14, electric power having the frequency converted is supplied from the alternating current power supply 28 through the high-frequency electric power driver 32 to all of the primary power supply side coils 30, and the electric power is transmitted from the primary power supply side coils 30 to the corresponding primary self-resonance coils 20 and 22 through electromagnetic induction. Moreover, the electric power is transmitted from the primary self-resonance coils 20 and 22 to the secondary self-resonance coils 24 and 26 on the side of the vehicle 14 through electromagnetic field resonance, and the electric power is transmitted from the secondary self-resonance coils 24 and 26 to the secondary electricity storage side coils 36 through electromagnetic induction.

In the case of the present embodiment also, the frequency of the electric power to be transmitted can be easily set even when the vehicle 14 moves, and the transmission efficiency can be improved even when the electric power is transmitted and received through electromagnetic field resonance using a plurality of the primary self-resonance coils 20 and 22 and a plurality of the secondary self-resonance coils 24 and 26. The other structures and operations are similar to those of the above-described first embodiment, and will not be described again.

In the above description, a case is described in which the present invention is applied to a mobile unit power-feed device which feeds power to a mobile unit, but the power-feed device is not limited to the mobile unit power-feed device. For example, the present invention may be applied in a case where power is fed from a primary coil provided on a first portion which is a fixed side or a mobile unit, to a secondary coil provided on a second portion which is another portion of the fixed side or a mobile unit, and the transmission efficiency can be improved when the electric power is transmitted and received through electromagnetic field resonance similar to the above.

### [Explanation of Reference Numerals]

10 ROAD; 12 GROUP OF PRIMARY SELF-RESONANCE COILS; 14 VEHICLE; 16 GROUP OF SECONDARY SELF-RESONANCE COILS; 18 POWER-FEEDING DEVICE; 20 FIRST PRIMARY SELF-RESONANCE COIL; 22 SECOND PRIMARY SELF-RESONANCE COIL; 24 FIRST SECONDARY SELF-RESONANCE COIL; 26 SECOND SECONDARY SELF-RESONANCE COIL; 28 ALTERNATING CURRENT POWER SUPPLY; 30 PRIMARY POWER SUPPLY SIDE COIL; 32 HIGH-FREQUENCY ELECTRIC POWER DRIVER; 34 TRAVELING MOTOR; 36 SECONDARY ELECTRICITY STORAGE SIDE COIL; 38 RECTIFIER; 40 ELECTRICITY STORAGE UNIT; 41 DRIVE UNIT; 42 SECONDARY-SIDE CONTROLLER; 44 TRAVELING MOTOR; 46 FIRST SWITCH; 48 SECOND SWITCH; 50, 52 CAPACITOR

## Claims

1. A power-feed device comprising:
a plurality of primary coils provided on a first portion; and
a plurality of secondary coils provided on a second portion, wherein
power is fed from the primary coil to the secondary coil,
each of the primary coils has a different resonance frequency from adjacent primary coils, and
each of the secondary coils has a different resonance frequency from adjacent secondary coils.

2. The power-feed device according to Claim 1, wherein
the first portion on which the plurality of primary coils are provided is a fixed side, and is used for feeding power to a mobile unit which is the second portion on which the plurality of secondary coils are provided,
the plurality of primary coils include at least one first primary coil and at least one secondary primary coil, the first primary coil and the second primary coil having different resonance frequencies from each other and being alternately placed with respect to a movement direction of the mobile unit, and
the plurality of secondary coils include at least one first secondary coil and at least one second secondary coil, the first secondary coil and the second secondary coil having different resonance frequencies from each other and being alternately placed with respect to the movement direction of the mobile unit.

3. The power-feed deice according to Claim 1 or 2, wherein
the first portion on which the plurality of primary coils are provided is a fixed side, and is used for feeding power to a mobile unit which is the second portion on which the plurality of secondary coils are provided,
the plurality of secondary coils are arranged in one line along a movement direction of the mobile unit, and
the plurality of primary coils are arranged in one line so that the plurality of primary coils can oppose the plurality of secondary coils in an up-and-down direction, with the movement of the mobile unit.

4. The power-feed device according to Claim 1 or 2, wherein
the first portion on which the plurality of primary coils are provided is a fixed side, and is used for feeding power to a mobile unit which is the second portion on which the plurality of secondary coils are provided,
the plurality of secondary coils are arranged in a plurality of lines along a movement direction of the mobile unit, and
the plurality of primary coils are arranged in a plurality of lines so that the plurality of primary coils can oppose the corresponding line of the plurality of secondary coils in an up-and-down direction, with the movement of the mobile unit.

5. The power-feed device according to any one of Claims 1 - 4, wherein
each of the primary coils has a different resonance frequency from the adjacent primary coils by having one or more of a radius, a length in an axial direction and a number of windings different from the adjacent primary coils, and
each of the secondary coils has a different resonance frequency from the adjacent secondary coils by having one or more of a radius, a length in an axial direction, and a number of windings different from the adjacent secondary coils.

6. The power-feed device according to any one of Claims 1 - 4, further comprising:
a capacitor which is connected to one or both of the plurality of primary coils and the plurality of secondary coils, wherein
one or both of the plurality of primary coils and the plurality of secondary coils has a different resonance frequency from the adjacent primary coils or the adjacent secondary coils by having a different capacitance of the capacitor connected to the primary coil or the secondary coil from that of the adjacent primary coils or the adjacent secondary coils.
